(19) Europäisches Patentamt
European Patent Office
Office européen des brevets

(11) Publication number: **0 253 449 B1**

# (12) EUROPEAN PATENT SPECIFICATION

(45) Date of publication of patent specification: **23.10.91** (51) Int. Cl.[5]: **C01B 33/34**

(21) Application number: **87201338.8**

(22) Date of filing: **13.07.87**

The file contains technical information submitted after the application was filed and not included in this specification

## (54) Novel process for the preparation of a ZSM-5 aluminosilicate zeolite.

(30) Priority: **14.07.86 US 885506**

(43) Date of publication of application:
**20.01.88 Bulletin 88/03**

(45) Publication of the grant of the patent:
**23.10.91 Bulletin 91/43**

(84) Designated Contracting States:
**BE DE FR GB NL SE**

(56) References cited:
**EP-A- 0 098 641**
**US-A- 3 758 667**
**US-A- 3 933 974**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **Winquist, Bruce Herman Charles**
**11202 Coldspring Drive**
**Houston Texas 77043(US)**

(74) Representative: **Spierenburg, Jan et al**
**Shell Internationale Research Maatschappij B.V. Patents, Licensing & Trade Marks Division P.O. Box 302**
**NL-2501 CH The Hague(NL)**

**EP 0 253 449 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a novel process for the preparation of a ZSM-5 aluminosilicate zeolite.

The essential ingredients in zeolite crystallization were originally thought to include an alkali hydroxide, a source of silicon oxide, a source of aluminium oxide and water. It was determined that if a specific chosen amine compound was utilized with these particular reagents, a ZSM-5 aluminosilicate zeolite could be prepared. It is, however, troublesome dealing with an amine in crystallization gel precursors on account of danger associated with its handling (toxicity and flammability) whilst during calcination to remove the amine steam may be formed, which could result in damage to the resultant aluminosilicate. The use of the amine is also expensive.

The present invention concerns a novel route to achieve a ZSM-5 aluminosilicate zeolite without resort to the amine method of preparation. Thus, a method of ZSM-5 preparation has been surprisingly achieved which advantageously modifies traditional ZSM-5 gel precursors by avoiding the addition of an amine to the crystallization gel precursor. The preparation is carried out utilizing a hydrolysis method wherein sodium hydroxide is essentially eliminated from the gel precursor as an initial additive.

A hydrolysis method to arrive at a different aluminosilicate zeolite has been disclosed in U.S. patent specification 3,933,974. Said hydrolysis method takes advantage of the hydrolysis of a hydrolyzable salt, such as $Na_3PO_4$, to achieve the presence of the hydroxyl ion, which in turn allows for requisite pH of between 10 and 12 necessary for tetrahedral coordination of aluminium or silicon atoms with oxygen. Said hydrolysis technique was developed at least in part to obviate the need for a template directive to acquire an aluminosilicate. The basic crystallizing reactants employed in the preparation of the aluminosilicate in said U.S. patent specification are essentially xerogels. These are prepared by heating such materials as LUDOX or sodium aluminate and silica for 1 to 2 hours, filtering, washing with deionized water and heating for an additional hour in one molar $NH_4Cl$ to obtain the xerogel (See column 6, Example VI of said patent specification). As many as 41 experiments are reported in said specification some of which had a molar ratio of silica to alumina of greater than 20:1 and a molar content of $Na_3PO_4$ to alumina of greater than 2.0. From experiments 16, 28, 29, 33, 36, 37 and 40 it will be clear that when these stoichiometric relationships are maintained, the resultant aluminosilicate (if not amorphous) is either a mixture of ferrierite, ferrierite and mordenite, or ferrierite, mordenite and adularia.

In an attempt to eliminate the cumbersome xerogel step of preparation, substitution was made in the crystallization of components comprising a colloidal silica (sometimes referred to as LUDOX) and an alumina hydrogel (sometimes referred to as NYACOL). The word LUDOX is Registered Trade Mark. The word NYACOL is a Registered Trade Mark. It was totally surprising that this change of the silica and alumina reagent sources, i.e. from the former silica-alumina xerogel to colloidal forms of silica and alumina, resulted in the preparation of a ZSM-5 aluminosilicate, not a ferrierite. A further hydrolysis method is disclosed in U.S. patent specification 3,758,667 relating to the synthesis of mordenite.

In European patent specification 98,641 the preparation of a ZSM-5 composition of matter is described wherein use is made of a fairly narrow stoichiometric range of silica to alumina of 20:1 to 50:1. However, even the starting material to produce this type of aluminosilicate must contain a certain quantity of $OH^-$ ions provided by the presence of sodium hydroxide. While it is recognized in said European patent specification that a ZSM-5 aluminosilicate is prepared without needing resort to an amine template director, the presence of a substantially large quantity of sodium hydroxide, i.e. to provide the $OH^-$ moiety, is still absolutely critical to said method of preparation. Reference is made to Table 2 at page 5 of said specification disclosing the molar ratios of the reagents: an exceedingly large quantity of sodium hydroxide is present in the gel material. It should also be noted that the experiments described in Examples 1-14, when modified into Examples 15-18, cause the production of a ZSM-5 material but without the use of a colloidal reactant and again with the presence of a relatively large quantity of sodium hydroxide as an additive to the gel.

It has now surprisingly been found that techniques of alumino-silicate manufacture can be greatly simplified and yet a manufacturer can still arrive at a ZSM-5 aluminosilicate as long as the proper stoichiometric relationship of silica and alumina is maintained when the source of these materials is derived from a colloidal source.

The present invention thus relates to a method for manufacturing a ZSM-5 aluminosilicate zeolite from a silica source, an alumina source, water, an alkali metal phosphate and an alkali metal fluoride which comprises crystallizing, at crystallizing conditions, an aqueous crystallizing gel comprising colloidal silica and colloidal alumina in a molar ratio of more than 20 moles of colloidal silica per mole of colloidal alumina, alkali metal phosphate in a molar ratio of 1.8 to 2.7 moles of said phosphate per mole of colloidal alumina, and alkali metal fluoride in a molar ratio between 0.5 and 2.1 moles of said fluoride per mole of colloidal

alumina.

By the method according to the present invention it is possible to produce a ZSM-5 aluminosilicate zeolite in the absence of an amine template director and wherein the method of preparation is, moreover, essentially free of sodium hydroxide as an initial reactant.

According to the present invention a ZSM-5 aluminosilicate zeolite can be prepared via a hydrolysis reaction using an alkali metal phosphate, to generate the required hydroxyl moiety in the gel composition.

The ZSM-5 aluminosilicate zeolite produced can be used suitably as a catalyst in hydrocarbon processing technology including catalytic cracking, lube oil dewaxing, hydrodesulphurization, hydrotreating, ethylbenzene preparation, etc., as well as separatory sieves useful for the separation of organic isomeric entities, i.e. the separation of para-xylene from ortho- and meta-xylene.

The method for the manufacture of a ZSM-5 aluminosilicate zeolite can be carried out suitably by using an alkali metal phosphate in a selected molar ratio per mole of colloidal alumina. Examples of alkali metal phosphates comprise sodium and potassium (hydrogen) phosphates. Preference is given to the use of sodium phosphates, in particular to the use of easily available trisodium phosphate. The method according to the present invention also requires the presence of an alkali metal fluoride in a selected molar ratio per mole of colloidal alumina. Examples of alkali metal fluorides comprise sodium fluoride and potassium fluoride. Very good results have been obtained when using potassium fluoride.

In particular, the present invention relates to a method of manufacture of a ZSM-5 aluminosilicate zeolite which comprises crystallizing, at crystallization conditions, an aqueous crystallizing gel comprising a colloidal silica, a colloidal alumina, water, an alkali metal phosphate and an alkali metal fluoride, wherein said colloidal silica and colloidal alumina are present in a ratio of greater than 20 moles of colloidal silica per mole of colloidal alumina, and where said phosphate is present in a range of from 1.8 to 2.7 moles of said phosphate per mole of said colloidal alumina and where said fluoride is present in a quantity of from 1.8 to 2.0 moles of said fluoride per mole of said colloidal alumina.

Preferably, the present invention relates to a method of manufacture of a ZSM-5 aluminosilicate wherein the crystallizing gel contains trisodium phosphate as alkali metal phosphate and potassium fluoride as alkali metal fluoride.

The method according to the present invention is suitably carried out in such a way that the alkali metal phosphate, in particular trisodium phosphate, is present in the aqueous crystallyzing gel in a stoichiometric range sufficient to provide adequate hydroxyl ions to inure a pH to said gel of from about 10 to about 12 to provide crystallinity to the resultant ZSM-5 aluminosilicate and wherein said alkali metal fluoride, in particular potassium fluoride, is present in a molar ratio of greater than 0.5 to less than 2.1 moles of said fluoride per mole of colloidal alumina. Thus, the alkali metal phosphate, in particular trisodium phosphate, will be present in a sufficient quantity to provide a viable hydroxyl ion in order to form the ZSM-5 aluminosilicate, i.e. in a molar ratio of 1.8 to 2.7 moles of said phosphate per mole of colloidal alumina. An alkali metal fluoride is also necessary in the crystallizing gel and should be present in a molar ratio based on the quantity of the colloidal alumina of greater than 0.5 to less than 2.1. The instant stoichiometric relationships in this application are recited in regard to the appropriate colloidal alumina and silica. This is to be understood that the stoichiometry is based on the active ingredients of the colloids and not on the basis of the non-active ingredients such as the water and stabilizing alkali cations. Thus, one mole of colloidal silica is the weight of colloidal silica that contains 60.08 grams, one formula weight, of $SiO_2$. Similarly, one mole of colloidal alumina is the weight of colloidal alumina that contains 101.96 grams, one formula weight, of $Al_2O_3$.

The amount of water present in the starting gel mixture may range suitably of from 200 to 500 moles of water per mole of colloidal alumina. The gel admixture must have colloidal silica present which is defined as a suspension of silica in water with trace amounts of stabilizing cations such as a sodium ion. The stabilizing sodium cations are present in order to maintain the suspension of $SiO_2$ in water and are not considered to be present as an active ingredient in the crystallizing gel.

These cations may be present in a content of 0.05 to 1.0 wt% of said colloidal silica. Preferably the colloidal silica LUDOX SM-30 produced by the DuPont Corporation is used in the aqueous crystallizing gel.

Other colloidal silicas which can be suitably applied in the method according to the present invention comprise commercially available colloidal silicas such as

- NYACOL, marketed by Nyacol Products, Inc., the main properties being: 50 %wt of silica, average particle size 20 micrometers, 0.2 %wt $Na_2O$ and a pH at 25 °C of 9.0.
- Nalco 2326, the main properties being: 14.5 %wt of $SiO_2$, average particle size 5 micrometers, 0.01 %wt $Na_2O$ and a pH of 9.0 and
- Nalco 2327, the main properties being: 39.8-40.7 %wt $SiO_2$, average particle size 21-25 micrometers, less than 0.1 %wt $Na_2O$ and a pH of 9.3.

A preferred colloidal alumina is NYCOL (The word NYCOL is a Registered Trade Mark) colloidal alumina which is defined as an aqueous dispersion of aluminium oxide particles in water with the particles carrying a slightly positive surface charge and a high surface area to weight ratio. Its main properties comprise: 20 %wt $Al_2O_3$, average particle size 5-30 micrometers and a pH at 25 °C amounting to 4.0. A further example of a commercially available colloidal alumina is Nalco 155-614, the main properties being: 10 %wt $Al_2O_3$, average particle size 2 micrometers and pH of 5.1.

As discussed hereinbefore, the stoichiometric molar ratio of colloidal silica to colloidal alumina in the gel composition must be greater than 20 and most preferably is between 20:1 to 50:1. If the stoichiometric molar ratio of colloidal silica to colloidal alumina falls below 20:1 it is most probable that ferrierite, mordenite or an amorphous structure will result from crystallization of the gel. These stoichiometric relationships of colloidal silica to colloidal alumina are based on the relationship of the active silica and alumina ingredients of the colloids added to the gels and not on the per se relationship of the total colloids one versus another.

It has been found that when operating at a silica-to-alumina molar ratio close to 20:1, the phosphate-to-alumina molar relationship is preferably in the range of 2.1:1 to 2.7:1 while at a molar ratio of silica-to-alumina at about 30:1, said ratio can be as low as 1.8:1. Based on the presence of trisodium phosphate the hydrolysis generating $OH^-$ ions can be explained as follows.

$$Na_3PO_4 + H_2O \longrightarrow HPO_4^{=} + OH^- + 3Na^+$$
$$H_2O + HPO_4^{=} \longrightarrow H_2PO_4^- + OH^-$$

The relationship between the fluoride and the ZSM-5 crystallization is currently unclear but the presence of fluoride in the crystallizing gel appears to be needed. The relative quantity of the alkali metal fluoride, like that of the alkali metal phosphate, may also vary with a change in the molar ratio of colloidal silica to colloidal alumina.

The ZSM-5 composition of matter to be produced by the methods according to the present invention will have an X-ray diffraction pattern containing at least the same or essentially the same lines as given in Table I.

TABLE I

| X-ray Diffraction Pattern | |
|---|---|
| d-spacing, $10^{-10}$m (Angstroms) | Intensity, Normalized |
| 11.22 | 19 |
| 10.03 | 18 |
| 4.28 | 12 |
| 3.87 | 100 |
| 3.82 | 81 |
| 3.76 | 46 |
| 3.73 | 61 |
| 3.66 | 32 |
| 3.45 | 15 |
| 3.32 | 15 |
| 3.06 | 15 |
| 2.99 | 21 |
| 2.49 | 12 |
| 2.02 | 17 |
| 2.00 | 20 |

The crystallization of the crystallizing gel is normally effected at hydrothermal treatment conditions including a temperature between 185 °C and 250 °C at any desirable pressure. Time of crystallization must be sufficient to inure crystallization of a product with an X-ray diffraction pattern of a ZSM-5 aluminosilicate zeolite containing at least the same or substantially the same lines as given in Table I hereinabove. A crystallization time of 20 to 150 hours is preferred, although once crystallization is initiated, total or near complete crystallization is established very quickly. To extend the time of crystallization via

hydrothermal treatment does little to enhance the catalytic or separatory process of the resultant ZSM-5 aluminosilicate although it is within the scope of this invention.

The present invention will now be elucidated by means of the following Example.

EXAMPLE

In Table II the amounts of reactants added in the various experiments to a crystallizing admixture are summarized. The procedure used was as follows:

A prescribed amount of reagent grade trisodium phosphate ($Na_3PO_4 \cdot 12 H_2O$) and anhydrous potassium fluoride were dissolved in a prescribed quantity of deionized water. A prescribed amount of phosphoric acid $H_3PO_4$, NYCOL colloidal alumina and LUDOX colloidal silica were added to the solution of trisodium phosphate and potassium fluoride.

The mixture was transferred to a stirred autoclave (3.78 litres) and heated with stirring for 64 hours at 210 °C. The product slurry was filtered, washed with deionized water and dried at 125 °C for 16 hours. The product was characterized by X-ray powder diffraction techniques using a Philips APD 3600 powder diffractometer, employing monochromatic CuKα radiation, with a scan step size of 0.020 degrees (2θ), counting for 0.5 seconds at each step. The prescribed amounts of reagent (in grams) and results according to the X-ray powder diffraction pattern are set forth in Table II.

## TABLE II

| Experiment No. | $Na_3PO_4$ | $H_3PO_4$ | KF | Colloidal $Al_2O_3$ | Colloidal $SiO_2$ | molar Ratio ~~$Al_2O_3/SiO_2$~~ $SiO_2/Al_2O_3$ | $H_2O$ |
|---|---|---|---|---|---|---|---|
| 1 | 147.6 | 1.1 | 20.9 | 94.4 | 444.7 | 20:1 | 791 |
| 2 | 154.3 | 1.1 | 20.8 | 94.2 | 443.8 | 20:1 | 786 |
| 3 | 130.7 | 1.5 | 19.4 | 88.0 | 622.0 | 30:1 | 638 |
| 4 | 130.6 | 1.5 | 20.4 | 87.9 | 621.6 | 30:1 | 638 |
| 5 | 130.7 | 1.5 | 18.5 | 88.1 | 622.4 | 30:1 | 639 |
| 6 | 124.3 | 1.5 | 19.5 | 88.2 | 623.2 | 30:1 | 643 |
| 7 | 137.0 | 1.5 | 19.4 | 87.8 | 620.8 | 30:1 | 633 |
| 8 | 130.7 | 1.5 | 19.4 | 88.0 | 622.0 | 30:1 | 638 |
| 9 | 142.1 | 1.1 | 22.0 | 94.5 | 445.1 | 20:1 | 795 |
| 10 | 191.3 | 1.4 | 28.0 | 121.2 | 571.1 | 20:1 | 587 |
| 11 | 142.3 | 1.1 | 19.8 | 94.6 | 445.8 | 20:1 | 796 |
| 12 | 135.4 | 1.1 | 20.9 | 94.7 | 446.4 | 20:1 | 801 |

TABLE II (continued)

| Experiment No. | molar Ratio $Na_3PO_4$/ $Al_2O_3$ | molar Ratio $KF/Al_2O_3$ | Temp °C | Time (hrs) | Product Structure 1,2 | Weight of Product (g) |
|---|---|---|---|---|---|---|
| 1 | 2.15:1 | 1.94:1 | 210 | 64 | ZSM-5, TR-ferrierite | 256 |
| 2 | 2.25:1 | 1.94:1 | 210 | 64 | ZSM-5, TR-ferrierite | 247 |
| 3 | 2.07:1 | 1.94:1 | 190 | 64 | ZSM-5, TR-unkown | 367 |
| 4 | 2.07:1 | 2.04:1 | 190 | 64 | ZSM-5, Mordenite TR-unknown | 333 |
| 5 | 2.07:1 | 1.84:1 | 190 | 64 | ZSM-5 | 342 |
| 6 | 1.97:1 | 1.94:1 | 190 | 64 | ZSM-5, TR-unknown | 388 |
| 7 | 2.17:1 | 1.94:1 | 190 | 64 | ZSM-5, unknown | 358 |
| 8 | 2.07:1 | 1.94:1 | 180 | 64 | ZSM-5, amorphous | 370 |
| 9 | 2.07:1 | 2.04:1 | 190 | 64 | ZSM-5, mordenite | 245 |
| 10 | 2.17:1 | 2.03:1 | 190 | 64 | ZSM-5, quartz | 329 |
| 11 | 2.07:1 | 1.84:1 | 190 | 64 | ZSM-5, ferrierite | 218 |
| 12 | 1.97:1 | 1.94:1 | 190 | 64 | ZSM-5, mordenite | 210 |

1-TR = trace; 2-In order of decreasing abundance

The data given in Table II must be reviewed in light of results reported for related experiments described in U.S. patent specification 3,933,974. Reference is made to the results of the following experiments collected from said U.S. patent specification and summarized in Table III below. The experiments referred to were carried out within the stoichiometric silica/alumina relationships described and claimed in the present case but different aluminosilicate products were attained (see the column "Products" in Table III) vis-a-vis Table II as a result of the addition of different types of reagents to the gel.

TABLE III

| Experiment No. | $Na_3PO_4$ | KF | $SiO_2$ | $Al_2O_3$ | $H_2O$ | Products |
|---|---|---|---|---|---|---|
| 16 | 2.07 | 4.0 | 20.4 | 1.0 | 246 | ferrierite |
| 28 | 2.07 | 1.0 | 21.0 | 1.0 | 246 | ferrierite |
| 29 | 2.07 | 1.0 | 24.1 | 1.0 | 246 | ferrierite, mordenite |
| 33 | 2.07 | 2.3 | 24.1 | 1.0 | 246 | amorphous |
| 36 | 2.07 | 3.0 | 21.0 | 1.0 | 246 | ferrierite |
| 37 | 2.07 | 3.0 | 24.1 | 1.0 | 246 | ferrierite |
| 40 | 2.07 | 4.0 | 21.0 | 1.0 | 246 | ferrierite, adularia, mordenite |
| 41 | 2.07 | 4.0 | 24.1 | 1.0 | 246 | ferrierite, adularia, mordenite |

The products as described in Table II (in accordance with the present invention) are predominantly ZSM-5 aluminosilicates while those reported in Table III (according to the prior art) are predominantly ferrierite. The differences in the experimental results given in Table II versus Table III are caused by the use of colloidal alumina and colloidal silica in substitution of the xerogels used as starting materials in the process described in U.S. patent specification 3,933,974. The former surprisingly results in a ZSM-5 aluminosilicate while the latter produced ferrierite.

## Claims

1. A method for manufacturing a ZSM-5 aluminosilicate zeolite from a silica source, an alumina source, water, an alkali metal phosphate and an alkali metal fluoride characterized by crystallizing an aqueous crystallizing gel comprising colloidal silica and colloidal alumina in a molar ratio of more than 20 moles of colloidal silica per mole of colloidal alumina, alkali metal phosphate in a molar ratio of 1.8 to 2.7 moles of said phosphate per mole of colloidal alumina, and alkali metal fluoride in a molar ratio greater than 0.5 to less than 2.1 moles of said fluoride per mole of colloidal alumina.

2. A method according to claim 1, wherein said crystallizing gel contains trisodium phosphate as alkali metal phosphate and potassium fluoride as alkali metal fluoride.

3. A method according to claim 1 or 2 wherein said molar ratio of colloidal silica to said colloidal alumina is from 20 to 50.

4. A method according to any one of claims 1-3 wherein said crystallizing gel contains a fluoride in a molar ratio of from 1.8 to 2.0 moles of said fluoride per mole of said colloidal alumina.

5. A method according to any one of claims 1-4 wherein said crystallization conditions include a temperature of from 185 °C to 250 °C yielding a product with an X-ray diffraction pattern containing at least the same or essentially the same lines as given hereinbelow:

| d-spacing, $10^{-10}$m (Angstroms) | Intensity, Normalized |
|---|---|
| 11.22 | 19 |
| 10.03 | 18 |
| 4.28 | 12 |
| 3.87 | 100 |
| 3.82 | 81 |
| 3.76 | 46 |
| 3.73 | 61 |
| 3.66 | 32 |
| 3.45 | 15 |
| 3.32 | 15 |
| 3.06 | 15 |
| 2.99 | 21 |
| 2.49 | 12 |
| 2.02 | 17 |
| 2.00 | 20 |

**6.** A method according to claim 5 wherein the time of crystallisation ranges from 20 hours to 150 hours.

**7.** A method according to one or more of claims 1-6 wherein water is present in a quantity of from 200 moles to 500 moles of water per mole of colloidal alumina.

**8.** A method according to claim 4 wherein said colloidal silica comprises a suspension of silicon dioxide in water with stabilizing cations therein.

**9.** A method according to claim 8 wherein said stabilizing cations comprise sodium ions in a weight content of from 0.05 to 1.0 wt% calculated on said colloidal silica.

**Revendications**

**1.** Un procédé de préparation d'une zéolite aluminosilicate ZSM-5 à partir d'une source de silice, d'une source d'alumine, d'eau, d'un phosphate de métal alcalin et d'un fluorure de métal alcalin, caractérisé par la cristallisation d'un gel cristallisable aqueux comprenant de la silice colloïdale et de l'alumine colloïdale dans un rapport molaire de plus de 20 moles de silice colloïdale par mole d'alumine colloïdale, un phosphate de métal alcalin dans un rapport molaire de 1,8 à 2,7 moles de ce phosphate par mode d'alumine colloïdale et un fluorure de métal alcalin dans un rapport molaire de plus de 0,5 et moins de 2,1 moles de ce fluorure par mole d'alumine colloïdale.

**2.** Un procédé selon la revendication 1, dans lequel le gel cristallisable contient du phosphate trisodique comme phosphate de métal alcalin et du fluorure de potassium comme fluorure de métal alcalin.

**3.** Un procédé selon la revendication 1 ou 2, dans lequel le rapport molaire de la silice colloïdale à l'alumine colloïdale est compris entre 20 et 50.

**4.** Un procédé selon l'une quelconque des revendications 1-3, dans lequel le gel cristallisable contient un fluorure dans un rapport molaire compris entre 1,8 et 2,0 moles de ce fluorure par mode de l'alumine colloïdale.

**5.** Un procédé selon l'une quelconque des revendications 1-4, dans lequel les conditions de cristallisation comprennent une température de 185°C à 250°C, donnant un produit dont le diagramme de diffraction des rayons X contient au moins les mêmes ou essentiellement les mêmes lignes qu'indiqué ci-dessous :

| Distance réticulaire, $10^{-10}$ m (Angströms) | Intensité, normalisée |
|---|---|
| 11,22 | 19 |
| 10,03 | 18 |
| 4,28 | 12 |
| 3,87 | 100 |
| 3,82 | 81 |
| 3,76 | 46 |
| 3,73 | 61 |
| 3,66 | 32 |
| 3,45 | 15 |
| 3,32 | 15 |
| 3,06 | 15 |
| 2,99 | 21 |
| 2,49 | 12 |
| 2,02 | 17 |
| 2,00 | 20 |

6. Un procédé selon la revendication 5, dans lequel le temps de cristallisation est compris entre 20 et 150 heures.

7. Un procédé selon l'une quelconque des revendications 1-6, dans lequel de l'eau est présente à raison de 200 moles à 500 moles d'eau par mole d'alumine colloïdale.

8. Un procédé selon la revendication 4, dans lequel la silice colloïdale comprend une suspension de bioxyde de silicium dans l'eau avec des cations stabilisants présents.

9. Un procédé selon la revendication 8, dans lequel les cations stabilisants comprennent des ions de sodium à raison de 0,05 à 1,0 % en poids par rapport à la silice coldoïdale.

**Patentansprüche**

1. Ein Verfahren zur Herstellung eines ZSM-5-Aluminosilikat-Zeolithes aus einer Siliciumdioxidquelle, einer Aluminiumoxidquelle, Wasser, einem Alkalimetallphosphat und einem Alkalimetallfluorid, gekennzeichnet durch das Kristallisieren eines wäßrigen kristallisierbaren Gels, enthaltend kolloidales Siliciumdioxid und kolloidales Aluminiumoxid in einem Molverhältnis von mehr als 20 Mol an kolloidalem Siliciumdioxid je Mol kolloidales Aluminiumoxid, Alkalimetallphosphat in einem Molverhältnis von 1,8 bis 2,7 Mol des genannten Phosphats je Mol kolloidales Aluminiumoxid, und Alkalimetallfluorid in einem Molverhältnis von mehr als 0,5 bis weniger als 2,1 Mol des genannten Fluorids je Mol kolloidales Aluminiumoxid.

2. Ein Verfahren nach Anspruch 1, in welchem das genannte kristallisierbare Gel Trinatriumphosphat als Alkalimetallphosphat und Kaliumfluorid als Alkalimetallfluorid enthält.

3. Ein Verfahren nach Anspruch 1 oder 2, in welchem das genannte Molverhältnis von kolloidalem Siliciumdioxid zu dem genannten kolloidalen Aluminiumoxid von 20:1 bis 50:1 beträgt.

4. Ein Verfahren nach einem der Ansprüche 1 bis 3, in welchem das genannte kristallisierbare Gel ein Fluorid in einem Molverhältnis von 1,8 bis 2,0 Mol des genannten Fluorids je Mol des genannten kolloidalen Aluminiumoxids enthält.

5. Ein Verfahren nach einem der Ansprüche 1 bis 4, in welchem die genannten Kristallisationsbedingungen eine Temperatur von 185 °C bis 250 °C einschließen, wodurch ein Produkt erhalten wird, welches ein Röntgenbeugungsdiagramm mit mindestens den gleichen oder mit im wesentlichen den gleichen Linien aufweist, wie im folgenden dargestellt:

| d-Abstand $10^{-10}m$(Å) | Intensität normalisiert |
|---|---|
| 11.22 | 19 |
| 10.03 | 18 |
| 4.28 | 12 |
| 3.87 | 100 |
| 3.82 | 81 |
| 3.76 | 46 |
| 3.73 | 61 |
| 3.66 | 32 |
| 3.45 | 15 |
| 3.32 | 15 |
| 3.06 | 15 |
| 2.99 | 21 |
| 2.49 | 12 |
| 2.02 | 17 |
| 2.00 | 20 |

6. Ein Verfahren nach Anspruch 5, in welchem die Kristallisationszeit im Bereich von 20 bis 150 Stunden liegt.

7. Ein Verfahren nach einem oder mehreren der Ansprüche 1 bis 6, in welchem Wasser in einer Menge von 200 Mol bis 500 Mol Wasser je Mol kolloidales Aluminiumoxid vorliegt.

8. Ein Verfahren nach Anspruch 4, in welchem das genannte kolloidale Siliciumdioxid eine Suspension von Siliciumdioxid in Wasser mit darin enthaltenen Stabilisierungskationen enthält.

9. Ein Verfahren nach Anspruch 8, in welchem die genannten Stabilisierungskationen Natriumionen in einem Gewichtsanteil von 0,05 bis 1,0 Gewichtsprozent, bezogen auf das genannte kolloidale Siliciumdioxid, umfassen.